# EUROPEAN PATENT SPECIFICATION

(11) **EP 1 061 641 B1**
(45) Date of publication and mention of the grant of the patent: **09.07.2003**
(21) Application number: 99830243.4
(22) Date of filing: 23.04.1999
(51) Int. Cl.: H02P 7/01, G01D 5/247, H02P 6/16

(54) **Drive system of a brushless motor equipped with hall sensors selfdiscriminating the phasing of the installed sensors**
Antriebssystem für bürstenlosem Motor mit Hallsensoren und selbsttätiger Bestimmung der Phasenlage der instalierten Sensoren
Système d'entraînement pour moteur sans balais equipé avec des capteurs de Hall reconnaissant la différence de phase entre les capteurs installés

(43) Date of publication of application: 20.12.2000
(73) Proprietor: STMicroelectronics S.r.l., 20041 Agrate Brianza (Milano) (IT)
(72) Inventor: Arrigo, Domenico, 20041 Agrate Brianza (IT)
(74) Representative: Pellegri, Alberto

(56) References cited:
- DE-A- 4 141 000
- GB-A- 2 305 033
- Brushless DC Motor Controller Datasheed issued by Motorola 1996 XP002116342

## Description

The present invention relates to driving techniques of brushless motors equipped with Hall effect sensors to detect the rotor's instantaneous position in order to synchronise the phase switchings commanded by the electronic driving system.

Commonly, the techniques for driving electronically switched multiphase brushless motors consist in forcing currents through the phase windings of the motor according to a voltage or current mode control and using Hall effect sensors for synchronizing the switchings. Depending on the number of phases windings and poles of the rotor, the driving system must command the phase switchings according to a proper sequential scheme, perfectly synchronised with the rotor position, in order to maximize efficiency and minimize ripple.

Frequently, a threephase motor with a rotor with two pairs of poles, the switching sequence has six phases, each of 60 electrical degrees.

One of the techniques employed for determining the rotor's instantaneous position is that of installing three Hall effect sensors.

These sensors are commercially available and provide for three logic signals (codes) whose logic combination permits to establish the rotor's position and the correct phase to be excited.

In general, the decoding conventions of the logic signals produced by such sensors consider different schemes, depending on the electrical sensor phasing in terms of electrical degrees of separation, which in turn depends on the sensors' physical position and the number of rotor poles. Therefore, by changing the sensors physical position and the number of rotor poles, there will be different sensor phasing, for example of 60, 120, 240 and 300 electrical degrees.

Normally, the integrated devices for decoding signals produced by Hall effect sensors installed in brushless motors and for processing the rotor angular position, commonly employed to realize the electronic driving systems, contemplate the possibility to pre-establish which sensor phasing scheme must be selected for correctly decoding and decoding the sensor signals. In practice, known devices dedicate one or more pins for presetting the decoding and processing circuit. Through these selection pins or circuit nodes an integrated circuit can be configured such to decode signals originating from Hall effect sensors positioned at intervals of 120 electrical degrees, 60 electrical degrees, or even 240 or 300 electrical degrees.

An example of commercially available decoding device is the MC33033 by Motorola wherein the selection of the actual angular separation between sensors of 60 or 120 electrical degrees is made through the pins 3 and 18.

It is evident the usefulness of a method and of a corresponding decoding circuit for the logic signals produced by three Hall effect sensors relating to instantaneous rotor position of a threephase brushless motor. Such a decoding method and detection circuit should be capable of self recognizing, depending on the direction of rotation, the actual sensor positions, at intervals of either 60, 120, 300 or 240 electrical degrees, without the need for supplying such phasing information to the decoding circuit. Such a decoding method permits the use of common devices without dedicating pins to effect a pre-setting phasing information, thus facilitating the manufacture of control systems for one or more brushless motors.

### OBJECT AND SUMMARY OF THE INVENTION

It is the object of the present invention to provide for an improved decoding method for decoding the logic signals produced by three Hall effect sensors installed in a three-phase brushless motor. It is a further object of the invention to detect the instantaneous position of the rotor and to discriminate the actual sensors' positions at intervals of 60, 120, 240 and 300 electrical degrees and to correctly decoder signals and identify the phase.

It is a further object of the invention to provide a driving system an electronically switched three-phase bruschless motor using the method of claim 1.

The invention is based on the fact that the signals provided by the three sensors produce a total of eight possible combinations, six of which are valid for example for a positioning at intervals of 60 electrical degrees of the sensors, while other six are valid for a positioning at intervals of 120 electrical degrees; however, in both cases only two of the six combinations are specific to a 60 or 120 degree positioning, whereas four of the six combinations are identical in both cases. The sample is valid for the other two possible phasings of the sensors, for example at 240 and 300 electrical degrees.

It has been found that by decoding a full set of eight possible combinations of the signals originating from the three sensors, it is possible to recognise, from the two dissimilar combinations of the six combinations detected in an electrical turn, the effective phasing (i.e., the separation intervals in electrical degrees) of the three sensors.

Therefore, the decoder may resolve the motor's position within a window of 60 electrical degrees for phasing of the sensors at 60, 120, 240 or 300 electrical degrees, without first supplying this phasing information to the decoding circuitry.

The prior art decoding circuit of the controller MC33033 (cf. Motorola Datasheet MC33033 "Brushless DC Motor Controller", 1996, XP002116342) is pre-conditioned to decode the six combinations relative to a phasing of the sensors at intervals of either 60/300 electrical degrees or of 120/240 electrical degrees. In contrast, the system of the invention decodes all the eight possible input combinations and recognises from the two dissimilar combinations specific to the different sensors phasing (angular separation), which is the one actually implemented. Therefore, the system processes the input combinations and determines the position of the rotor or the current phase of the runnig motor to permit the generation of the correct driving signals.

The invention is defined in the annexed claims.

### BRIEF DESCRIPTION OF THE DRAWINGS

The various aspects and advantages of the invention will became even clearer through the ensuing description of several embodiments and by referring to the attached drawings, wherein:
**Figure 1** shows the switching sequence of a star-connected threephase brushless motor;
**Figure 2** is the diagram of the motor and of the driving three half-bridge power stage;
**Figure 3** is a circuit diagram of an embodiment of the driving system of the invention;
**Figure 4** shows the driving diagrams of the system of figure 3.

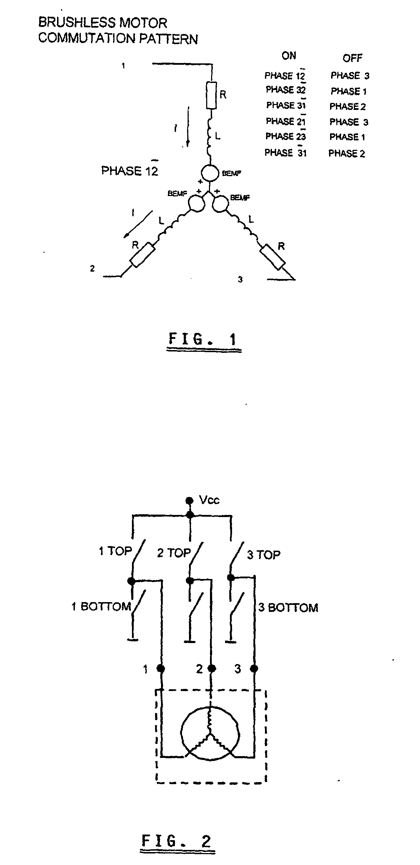

By referring to figure 1, containing the electrical scheme of a threephase brushless motor in a star configuration (though the method of the invention is equally applicable also in case of a motor in a triangle delta configuration), the six different switching phases are indicated using the notation 1$\overline{\text{2}}$ for indicating that the current flows from the terminal of the phase winding 1 to the star centre and from the star centre out of the terminal of phase winding 2, and so forth.

According to the known decoding methods and relative decoders, the decoding is pre-ordered, depending on the type of phasing of the all sensors installed in the motor, for the six drive phases, according to the following decoding tables.

**TABLE 1**

| FORWARD SEQUENCE LOGIC DECODING FOR A POSITIONING AT INTERVALS OF 60° ELECTRICAL OF THE THREE SENSORS | | | | | | |
|---|---|---|---|---|---|---|
| H1 | 1 | 1 | 1 | 0 | 0 | 0 |
| H2 | 0 | 1 | 1 | 1 | 0 | 0 |
| H3 | 0 | 0 | 1 | 1 | 1 | 0 |
| Phase | 1$\overline{\text{3}}$ | 2$\overline{\text{3}}$ | 2$\overline{\text{1}}$ | 3$\overline{\text{1}}$ | 3$\overline{\text{2}}$ | 1$\overline{\text{2}}$ |

**TABLE 2**

| FORWARD SEQUENCE LOGIC DECODING FOR A POSITIONING AT INTERVALS OF 120° ELECTRICAL OF THE THREE SENSORS. | | | | | | |
|---|---|---|---|---|---|---|
| H1 | 1 | 1 | 0 | 0 | 0 | 1 |
| H2 | 0 | 1 | 1 | 1 | 0 | 0 |
| H3 | 0 | 0 | 0 | 1 | 1 | 1 |
| Phase | 1$\overline{\text{3}}$ | 2$\overline{\text{3}}$ | 2$\overline{\text{1}}$ | 3$\overline{\text{1}}$ | 3$\overline{\text{2}}$ | 1$\overline{\text{2}}$ |

It is observed that any of the two phasings at 60 or 120 electrical degrees, four out of the six combinations are identical. This means that the decoding logic for such four common combinations may be the same in both cases. The only difference between the two different sensor phasings is that two of the six combinations or codes, i.e., those relative to the operating phases 2$\overline{\text{1}}$ and $\overline{\text{1}}$2, are distinct. Table 3 below indicates the respective codes, for these two phases of operation of the motor.

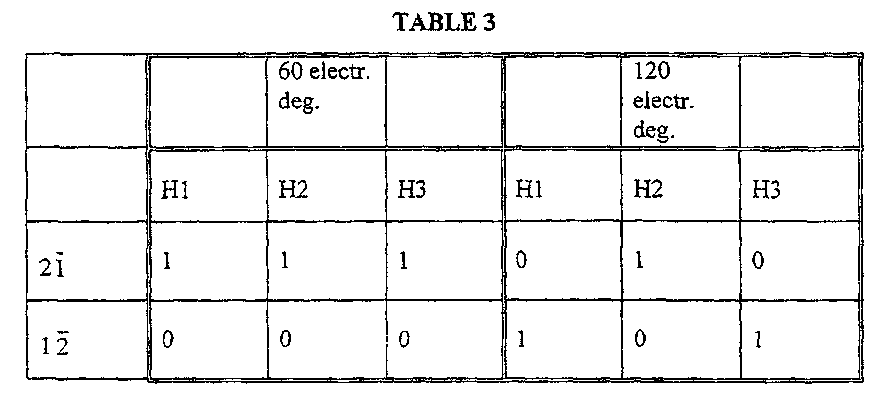

Therefore, all the eight possible combinations or codes determined by the three logic signals originating from the respective Halls effect sensors may be validly decoded for the case of a sensor phasing of 120 or 60 electrical degrees.

Therefore, a decoder capable of processing all eight possible combinations or codes that may originate from the signals coming from the three sensors, depending on their phasing, may resolve the rotor's position within a 60 electrical degrees window, for sensor phasings of 60 or of 120 electrical degrees, without requiring any selection command.

The following Table 4 shows the logic decoding of all eight combinations of the signals generated by the three sensors H1, H2 and H3, according to the method of the present invention.

**TABLE 4**

| FORWARD SEQUENCE LOGIC DECODING FOR A PHASING OF THE THREE SENSORS OF 60 OR 120 ELECTRICAL DEGREES. | | | | | | | | |
|---|---|---|---|---|---|---|---|---|
| H1 | 1 | 1 | 0 | 0 | 0 | 1 | 1 | 0 |
| H2 | 0 | 1 | 1 | 1 | 0 | 0 | 1 | 0 |
| H3 | 0 | 0 | 0 | 1 | 1 | 1 | 1 | 0 |
| Phase | 1$\overline{\text{3}}$ | 2$\overline{\text{3}}$ | 2$\overline{\text{1}}$ | 3$\overline{\text{1}}$ | 3$\overline{\text{2}}$ | 1$\overline{\text{2}}$ | 2$\overline{\text{1}}$ | 1$\overline{\text{2}}$ |
| Hall sensors Phasing | 60/120 | 60/120 | 120 | 60/120 | 60/120 | 120 | 60 | 60 |

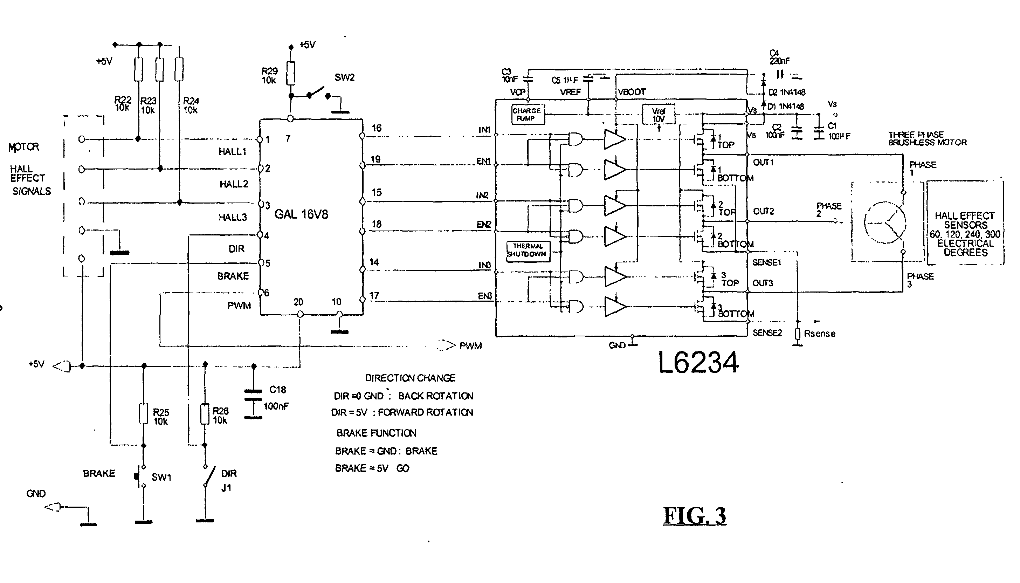

A driving circuit having an output power stage constituted by six power switches, electrically connected to make three half -bridge output driving stages for the respective phase windings of a threephase motor, is shown in Figure 2. Each output driving half-bridge stage includes a high-side switch and a low-side switch.

The logic state 1 implies a turn-on condition of the respective switch and the logic state 0 represents a cut off condition of the respective switch of each half-bridge. The logic decoding table defining all six driving phases of the six switches for Hall effect sensors phasings of 120 and 60 electrical degrees is shown in the Table 5 below.

**TABLE 5**

| FORWARD SEQUENCE LOGIC DECODING FOR MOTORS EQUIPPED WITH HALL SENSORS WITH A PHASING OF 120 AND 60 ELECTRICAL DEGREES. | | | | | | | | |
|---|---|---|---|---|---|---|---|---|
| H1 | 1 | 1 | 0 | 0 | 0 | 1 | 1 | 0 |
| H2 | 0 | 1 | 1 | 1 | 0 | 0 | 1 | 0 |
| H3 | 0 | 0 | 0 | 1 | 1 | 1 | 1 | 0 |
| Phasing | - | - | - | - | - | - | - | - |
| | 13 | 23 | 21 | 31 | 32 | 12 | 21 | 12 |
| Hall | 60/120 | 60/120 | 120 | 60/120 | 60/120 | 120 | 60 | 60 |
| 1 top | 1 | 0 | 0 | 0 | 0 | 1 | 0 | 1 |
| 2 top | 0 | 1 | 1 | 0 | 0 | 0 | 1 | 0 |
| 3 top | 0 | 0 | 0 | 1 | 1 | 0 | 0 | 0 |
| 1 Bottom | 0 | 0 | 1 | 1 | 0 | 0 | 1 | 0 |
| 2 Bottom | 0 | 0 | 0 | 0 | 1 | 1 | 0 | 1 |
| 3 Bottom | 1 | 1 | 0 | 0 | 0 | 0 | 0 | 0 |

The reduced logic functions that correspond to Table 5 are:$\text{1top =} \overline{\text{H2}} \text{*(H1 +} \overline{\text{H3}} \text{)}$$\text{2top = H2*(H1 +} \overline{\text{H3}} \text{)}$$\text{3top =} \overline{\text{H1}} \text{*H3}$$\text{1bottom = H2*(} \overline{\text{H1}} \text{+ H3)}$$\text{2bottom =} \overline{\text{H2}} \text{*(} \overline{\text{H1}} \text{+ H3)}$$\text{3bottom = H1 *} \overline{\text{H3}}$

Wherein:
⁻ *Indicates the logic NOT*
* *Indicates the logic AND*
+ *Indicates the logic OR.*

**TABLE 6**

| LOGIC DECODING OF MOTORS EQUIPPED WITH HALL SENSORS WITH PHASINGS OF 120, 60, 300 AND 240 ELECTRICAL DEGREES FOR BOTH FORWARD AND REVERSE ROTATION. | | | | | | | | | | | | |
|---|---|---|---|---|---|---|---|---|---|---|---|---|
| H1 | H2 | H3 | DIR | OUTPUT | FORWARD ROTATION With the following Hall sensor | REVERSE ROTATION With the following Hall sensor | 1 top | 2 top | 3 top | 1 bottom | 2 bottom | 3 bottom |
| 1 | 0 | 0 | 1 | 1$\overline{\text{3}}$ | 60/120 | 300/240 | 1 | 0 | 0 | 0 | 0 | 1 |
| 0 | 1 | 0 | 1 | 2$\overline{\text{3}}$ | 60/120 | 300/240 | 0 | 1 | 0 | 0 | 0 | 1 |
| 0 | 1 | 0 | 1 | 2$\overline{\text{1}}$ | 120 | 240 | 0 | 1 | 0 | 1 | 0 | 0 |
| 0 | 1 | 1 | 1 | 3$\overline{\text{1}}$ | 60/120 | 300/240 | 0 | 0 | 1 | 1 | 0 | 0 |
| 0 | 0 | 1 | 1 | 3$\overline{\text{2}}$ | 60/120 | 300/240 | 0 | 0 | 1 | 0 | 1 | 0 |
| 1 | 0 | 1 | 1 | 1$\overline{\text{2}}$ | 120 | 240 | 1 | 0 | 0 | 0 | 1 | 0 |
| 1 | 1 | 1 | 1 | 2$\overline{\text{1}}$ | 60 | 300 | 0 | 1 | 0 | 1 | 0 | 0 |
| 0 | 0 | 0 | 1 | 1$\overline{\text{2}}$ | 60 | 300 | 1 | 0 | 0 | 0 | 1 | 0 |
| 1 | 0 | 0 | 0 | 3$\overline{\text{1}}$ | 300/240 | 60/120 | 0 | 0 | 1 | 1 | 0 | 0 |
| 1 | 1 | 0 | 0 | 3$\overline{\text{2}}$ | 300/240 | 60/120 | 0 | 0 | 1 | 0 | 1 | 0 |
| 0 | 1 | 0 | 0 | 1$\overline{\text{2}}$ | 240 | 120 | 1 | 0 | 0 | 0 | 1 | 0 |
| 0 | 1 | 1 | 0 | 1$\overline{\text{3}}$ | 300/240 | 60/120 | 1 | 0 | 0 | 0 | 0 | 1 |
| 0 | 0 | 1 | 0 | 2$\overline{\text{3}}$ | 300/240 | 60/120 | 0 | 1 | 0 | 0 | 0 | 1 |
| 1 | 0 | 1 | 0 | 2$\overline{\text{1}}$ | 240 | 120 | 0 | 1 | 0 | 1 | 0 | 0 |
| 1 | 1 | 1 | 0 | 1$\overline{\text{2}}$ | 300 | 60 | 1 | 0 | 0 | 0 | 1 | 0 |
| 0 | 0 | 0 | 0 | 2$\overline{\text{1}}$ | 300 | 60 | 0 | 1 | 0 | 1 | 0 | 0 |

As may be easily recognized from Table 6, the decoding logic permits the selection of the direction of rotation of the motor (forward or reverse) and is capable of decoding the signals produced by the Hall-effect sensors for any phasing (60, 120, 240 and 300 electrical degrees).

The first three columns (H1, H2, H3) show the signals produced by the three Hall sensors.

The fourth column represents the input signal (DIR) that sets the direction of rotation of the motor.

The fifth column (OUTPUT) shows the excitation of the respective phase windings derived from the decoding the Hall sensor signals.

The sixth and seventh columns represent the rotation direction of the motor (forward or reverse) congruent with the respective phasing of the sensor. For example, with an signal DIR=1, the first six signal combinations of the signals from the Hall-effect sensors are decoded to drive in a forward direction a motor equipped with Hall sensors with a phasing of 60 or of 120 electrical degrees. With the same input DIR=1, these six combinations would be decoded to drive the motor in a reverse direction with Hall sensors with a phasing of 300 or of 240 electrical degrees.

In other words, the decoding of the signals of Hall effect sensors positioned at 60 and 120 electrical degrees with a forward rotating motor, corresponds to the decoding of the signals of Hall effect sensors positioned at 300 and 240 electrical degrees, respectively, with a reverse rotating motor. Conversely, the decoding of the signals of Hall effect sensors with a phasing of 60 and 120 electrical degrees with a reverse rotating motor corresponds to the decoding of the signals of Hall effect sensors with a phasing of 300 and 240 electrical degrees, respectively, with a forward rotating motor rotation.

In the case of sensors with a phasing of 60 or 120 electrical degrees, the system is capable of properly driving the motor in the correct direction of rotation by recognizing the desired rotating direction (forward if DIR=1 or reverse is DIR=0) without preventively supplying to the system any information about the type of installed sensors (i.e., their phasing).

In the case of sensors with a phasing of 300 or 240 electrical degrees, the system is capable of properly driving the motor in the correct direction of rotation, by recognizing the desired rotating direction (forward if DIR=0 or reverse is DIR=1) without supplying the system with any information about the type of installed sensors (i.e., their phasing).

In substance, in order to correctly set the desired direction of rotation it is only necessary to know only if the Hall sensors have a phasing of 60 or 120 electrical degrees, or of 300 or 240 electrical degrees.

The remaining columns represent the output logic functions of the decoded signals.

Often, integrated driving systems such as for example the L6234 device of STMicroelectronics, include a logic input driving stage and power switches. These integrated circuits employ two distinct logic inputs (commands) for each half bridge, respectively INPUT and ENABLE, whose logic function is described in the following table.

| | | | | |
|---|---|---|---|---|
| ENABLE | 0 | 0 | 1 | 1 |
| INPUT | 0 | 1 | 0 | 1 |
| TOP switch | 0 | 0 | 0 | 1 |
| BOTTOM switch | 0 | 0 | 1 | 0 |

If the driving system uses such an integrated circuit, the logic decoding and driving table according to the present invention becomes as follows:

**TABLE 7**

| LOGIC DECODING OF A MOTOR EQUIPPED WITH HALL EFFECT SENSORS WITH A PHASING OF 120 AND 60 ELECTRICAL DEGREES AND WITH A PHASING OF 300 AND 240 ELECTRICAL DEGREES FOR FORWARD AND REVERSE ROTATION. | | | | | | | | | | | | |
|---|---|---|---|---|---|---|---|---|---|---|---|---|
| H1 | H2 | H3 | DIR | OUTPUT | FORWARD ROTATION With the following Hall sensor | REVERSE ROTATION With the following Hall sensor | IN1 | IN2 | IN3 | EN1 | EN2 | EN3 |
| 1 | 0 | 0 | 1 | 1$\overline{\text{3}}$ | 60/120 | 300/240 | 1 | X | 0 | 1 | 0 | 1 |
| 1 | 1 | 0 | 1 | 2$\overline{\text{3}}$ | 60/120 | 300/240 | X | 1 | 0 | 0 | 1 | 1 |
| 0 | 1 | 0 | 1 | 2$\overline{\text{1}}$ | 120 | 240 | 0 | 1 | X | 1 | 1 | 0 |
| 0 | 1 | 1 | 1 | 3$\overline{\text{1}}$ | 60/120 | 300/240 | 0 | X | 1 | 1 | 0 | 1 |
| 0 | 0 | 1 | 1 | 3$\overline{\text{2}}$ | 60/120 | 300/240 | X | 0 | 1 | 0 | 1 | 1 |
| 1 | 0 | 1 | 1 | 1$\overline{\text{2}}$ | 120 | 240 | 1 | 0 | X | 1 | 1 | 0 |
| 1 | 1 | 1 | 1 | 2$\overline{\text{1}}$ | 60 | 300 | 0 | 1 | X | 1 | 1 | 0 |
| 0 | 0 | 0 | 1 | 1$\overline{\text{2}}$ | 60 | 300 | 1 | 0 | X | 1 | 1 | 0 |
| 1 | 0 | 0 | 0 | 3$\overline{\text{1}}$ | 300/240 | 60/120 | 0 | X | 1 | 1 | 0 | 1 |
| 1 | 1 | 0 | 0 | 3$\overline{\text{2}}$ | 300/240 | 60/120 | X | 0 | 1 | 0 | 1 | 1 |
| 0 | 1 | 0 | 0 | 1$\overline{\text{2}}$ | 240 | 120 | 1 | 0 | X | 1 | 1 | 0 |
| 0 | 1 | 1 | 0 | 1$\overline{\text{3}}$ | 300/240 | 60/120 | 1 | X | 0 | 1 | 0 | 1 |
| 0 | 0 | 1 | 0 | 2$\overline{\text{3}}$ | 300/240 | 60/120 | X | 1 | 0 | 0 | 1 | 1 |
| 1 | 0 | 1 | 0 | 2$\overline{\text{1}}$ | 240 | 120 | 0 | 1 | X | 1 | 1 | 0 |
| 1 | 1 | 1 | 0 | 1$\overline{\text{2}}$ | 300 | 60 | 1 | 0 | X | 1 | 1 | 0 |
| 0 | 0 | 0 | 0 | 2$\overline{\text{1}}$ | 300 | 60 | 0 | 1 | X | 1 | 1 | 0 |

X indicates a "don't care" condition, that is, it is not necessary to consider any specific value to be assigned.

The reduced logic functions that correspond to the table are:$\text{IN1 =(} \overline{\text{H2}} \text{*DIR)+(H2*} \overline{\text{DIR}} \text{)}$$\text{IN2 =(H2*DIR)+(} \overline{\text{H2}} \text{*} \overline{\text{DIR}} \text{)}$$\text{IN3 =(H3*DIR)+(} \overline{\text{H3}} \text{*} \overline{\text{DIR}} \text{)}$$\text{EN1 =(} \overline{\text{H1}} \text{+} \overline{\text{H2}} \text{+H3)*(H1+H2+} \overline{\text{H3}} \text{)}$$\text{EN2 =(} \overline{\text{H1}} \text{+H2+H3)*(H1+} \overline{\text{H2}} \text{+} \overline{\text{H3}} \text{)}$$\text{EN3 =} \overline{\text{H1}} \text{*H3+H1*} \overline{\text{H3}}$

Wherein:
⁻ *indicates the logic NOT*
* *indicates the logic AND*
+ *indicates the logic OR.*

The new system of the invention with a scheme as depicted in Figure 3 has been tested using a programmable logic device namely a GAL16V8.

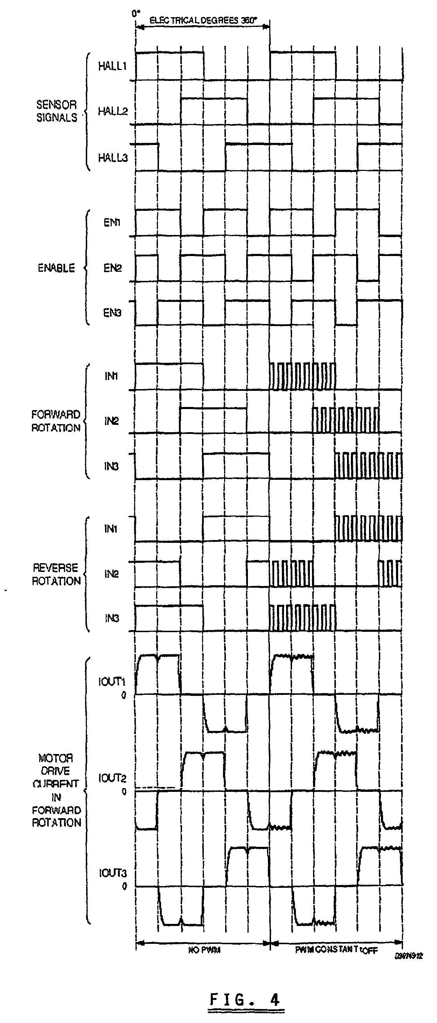

The correct logic driving sequence is produced by the GAL16V8, by decoding the signals coming from three Hall-effect sensors installed in the motor and generating INPUT and ENABLE signals as shown in the diagrams of Figure 4.

An electrical braking function is obtained by conditioning to a low logic level the input signals (IN) in order to turn on the low side diffused metal oxide (DMOS) transistor of the half-bridges enabled by the corresponding enable signal diffused metal oxide (EN).

The pulse width modulation (PWM) signal is used to effect the "chopping" of the INPUT signals. With the DIR jumper open a forward rotation is obtained if the installed Hall effect sensors have a phasing of 60 or 120 electrical degrees, or a reverse rotation is obtained it the Hall sensors have a phasing of 300 or 240 electrical degrees, and viceversa when the DIR jumper is applied to ground.

The switch SW2 commands the start up and the stop of the motor.

The representative signals of the driving scheme of figure 3 are depicted in the diagrams of Figure 4.

## Claims

1. A method of decoding signals produced by three Hall-effect sensors installed in an electronically switched three-phase brushless motor according to a sequence of six driving phases to be switched synchronously with a rotor position, **characterised by** the steps:
determining a real phasing of the three Hall effect sensors at either 60, 120, 300 or 240 electrical degrees by:
decoding a whole set of eight possible combinations of the three logic signals produced by said three Hall effect sensors;
discriminating the real phasing of the three Hall effect sensors based upon two dissimilar combinations from among six valid combinations detected in an electrical turn, four combinations of which are coincident;
determining the rotor position and generating logic driving signals synchronous with the monitored rotor position.

2. A driving system for an electronically switched three-phase brushless motor according to a sequence of six driving phases switched synchronously with the rotor position, determined by a decoding logic circuit for logic signals produced by three Hall effect sensors installed in the motor, **characterized in that** it comprises a logic circuit input receiving three logic signals produced by said three Hall effect sensors and a selection signal indicating a desired direction of rotation, and outputting three pairs of logic signals, respectively for enabling and driving the three windings of the motor, said decoding logic circuit determining a real phasing of the three Hall effect sensors by using the method of claim 1.

## Patentansprüche

1. Verfahren zum Decodieren von Signalen, die durch drei Halleffektsensoren erzeugt werden, die in einem elektronisch geschalteten bürstenlosen Drehstrommotor installiert sind, gemäß einer Sequenz von sechs Antriebsphasen, die synchron mit einer Rotorposition geschaltet werden sollen, **gekennzeichnet durch** die Schritte:
Bestimmen einer wirklichen Phasenlage der drei Halleffektsensoren bei entweder 60, 120, 300 oder 240 elektrischen Grad **durch**:
Decodieren eines ganzen Satzes acht möglicher Kombinationen der drei logischen Signale, die **durch** die drei Halleffektsensoren erzeugt werden; Diskriminieren der wirklichen Phasenlage der drei Halleffektsensoren beruhend auf zwei unterschiedlichen Kombinationen aus sechs gültigen Kombinationen, die in einer elektrischen Umdrehung detektiert werden, von denen vier Kombinationen zusammenfallen;
Bestimmen der Rotorposition und Erzeugen logischer Antriebssignale synchron mit der überwachten Rotorposition.

2. Antriebssystem für einen elektronisch geschalteten bürstenlosen Drehstrommotor gemäß einer Sequenz von sechs Antriebsphasen, die synchron mit der Rotorposition geschaltet werden, die durch eine Decodierungslogikschaltung für logische Signale bestimmt werden, die durch drei Halleffektsensoren erzeugt werden, die im Motor installiert sind, **dadurch gekennzeichnet, daß** es einen Logikschaltungseingang aufweist, der drei logische Signale, die durch die drei Halleffektsensoren erzeugt werden, und ein Auswahlsignal aufnimmt, das eine gewünschte Rotationsrichtung anzeigt, und drei Paare von logischen Signalen ausgibt, die jeweils zur Freigabe und Betreiben der drei Wicklungen des Motors dienen, wobei die Decodierungslogikschaltung eine wirkliche Phasenlage der drei Halleffektsensoren durch Verwendung des Verfahrens des Anspruchs 1 bestimmt.

## Revendications

1. Procédé de décodage de signaux produits par trois capteurs à effet Hall installés dans un moteur triphasé sans collecteur à commutation électronique selon une séquence de six phases de pilotage à commuter en synchronisme avec la position de rotor, **caractérisé par** les étapes suivantes :
déterminer la phase réelle des trois capteurs à effet Hall à 60, 120, 300 ou 240 degrés électriques en :
décodant un ensemble complet des huit combinaisons possibles des trois signaux logiques produits par les trois capteurs à effet Hall ;
discriminant le déphasage réel des trois capteurs à effet Hall sur la base de deux combinaisons différentes parmi six combinaisons valides détectées en un tour électrique, dont quatre combinaisons sont en coïncidence ;
déterminant la position du rotor et produisant des signaux logiques de commande synchrones avec la position détectée du rotor.

2. Système de commande d'un moteur triphasé sans collecteur à commutation électronique selon une séquence de six phases de pilotage commutées en synchronisme avec la position du rotor, déterminée par un circuit logique de décodage pour des signaux logiques produits par trois capteurs à effet Hall installés dans le moteur, **caractérisé en ce qu'**il comprend une entrée de circuit logique recevant trois signaux logiques produits par les trois capteurs à effet Hall et un signal de sélection indiquant une direction désirée de rotation, et fournissant trois paires de signaux logiques respectivement pour valider et piloter les trois enroulements du moteur, ce circuit logique de décodage déterminant la phase réelle des trois capteurs à effet Hall en utilisant le procédé selon la revendication 1.
